# EUROPEAN PATENT SPECIFICATION

(11) **EP 3 228 152 B1**
(45) Date of publication and mention of the grant of the patent: **20.11.2019**
(21) Application number: 14907560.8
(22) Date of filing: 04.12.2014
(51) Int. Cl.: H04W 88/10, H04W 12/00, H04W 84/12, H04W 88/06, H04W 92/02, H04W 12/08, H04W 12/06, H04W 12/02, H04L 12/24, H04L 29/06

(54) **METHOD PERFORMED BY A WLAN NODE IN AN INTEGRATED WIRELESS COMMUNICATIONS NETWORK, FOR APPLYING SECURITY TO RECEIVED TRAFFIC DATA.**
VON EINEM WLAN-KNOTEN IN EINEM INTEGRIERTEN DRAHTLOSKOMMUNIKATIONSNETZWERK AUSGEFÜHRTES VERFAHREN ZUR ANWENDUNG VON SICHERHEIT AUF EMPFANGENE VERKEHRSDATEN
PROCÉDÉ RÉALISÉ PAR UN NOEUD DE RÉSEAU LOCAL SANS FIL (WLAN) DANS UN RÉSEAU DE COMMUNICATION SANS FIL INTÉGRÉ, POUR APPLIQUER UNE SÉCURITÉ AUX DONNÉES DE TRAFIC REÇUES

(43) Date of publication of application: 11.10.2017
(73) Proprietor: Telefonaktiebolaget LM Ericsson (publ), 164 83 Stockholm (SE)
(72) Inventor: MESTANOV, Filip, SE-191 49 Sollentuna (SE); NORRMAN, Karl, S-116 28 Stockholm (SE); TEYEB, Oumer, SE-171 44 Solna (SE)
(74) Representative: Ericsson
(86) International application number: PCT/SE2014/051447
(87) International publication number: WO 2016/089265

(56) References cited:
- EP-A1- 3 195 642
- WO-A1-2009/151452
- WO-A2-2008/070251
- GB-A- 2 495 550
- US-A1- 2013 216 043
- US-A1- 2014 181 515
- US-A1- 2014 213 219
- US-A1- 2014 254 454

## Description

### Technical Field

The embodiments of the present invention relate to a Wireless Local Area Network (WLAN) node, a wireless device and to methods therein, and in particular to how they relate to being adapted for use in an integrated wireless communications network comprising, for example, a WLAN and a cellular communications network.

### Background

Most current Wireless Local Area Networks, WLAN, or Wi-Fi networks (WLAN and Wi-Fi being used interchangeably in the remainder of this document) are networks that exist totally separate from cellular or mobile communication networks, and can be seen as non-integrated from the perspective of a terminal or user equipment.

Most operating systems (OSs) used in user equipment, for example Android™ and iOS®, support a simple Wi-Fi offloading mechanism whereby a user equipment can immediately switch all its IP traffic to a Wi-Fi network upon the detection of a suitable network with a received signal strength above a certain level. The decision about whether or not to offload to a Wi-Fi network is referred to as an access selection strategy, and the term "Wi-Fi-if-coverage" is used to refer to the aforementioned strategy of selecting a Wi-Fi network whenever such a network is detected. There are several drawbacks of the "Wi-Fi-if-coverage" strategy.

For example, although a user can save previous pass codes for already accessed Wi-Fi Access Points (APs), hotspot login for previously non-accessed APs usually requires user intervention, either by entering the pass code using a Wi-Fi connection manager or using a web interface. The connection manager is software on a user device that is in charge of managing the network connections of the terminal, taking into account user preferences, operator preferences, network conditions, and so on.

A drawback of the Wi-Fi-if-coverage strategy is that no consideration is made of expected user experience, except those considered in a user equipment implemented proprietary solution, and this can lead to a user equipment being handed over from a high data rate mobile network connection to a low data rate Wi-Fi connection. Even though the operating system of a user equipment, or some high level software, is intelligent enough to make the offload decisions only when the signal level on the Wi-Fi is considerably better than the mobile network link, there can still be limitations on the backhaul of the Wi-Fi Access Point (AP) that may end up being a bottleneck.

Another drawback of the Wi-Fi-if-coverage strategy is that no consideration is made of the respective load conditions in the mobile network and Wi-Fi network. As such, a user equipment might still be offloaded to a Wi-Fi access point that is serving several user equipment, while the mobile network (e.g. LTE), to which it was previously connected to, is rather unloaded.

In addition, the Wi-Fi-if-coverage strategy can lead to interruptions of on-going services, for example due to the change of IP address when a user equipment switches to the Wi-Fi network. For example, a user who started a Voice over IP (VoIP) call while connected to a mobile network is likely to experience a call drop when arriving home and the user equipment switches to the Wi-Fi network automatically. Although some applications, for example Spotify®, are intelligent enough to handle this and survive the change of IP address, the majority of current applications cannot. This can place a burden on application developers if they have to ensure service continuity.

Yet a further drawback of the Wi-Fi-if-coverage strategy is that no consideration about the mobility of the user equipment is made. Due to this, a fast moving user equipment can end up being offloaded to a Wi-Fi access point for a short duration, just to be handed back over to the mobile network. This is a particular problem in scenarios such as cafes with open Wi-Fi, where a user walking by or even driving by the cafe might be affected by this. Such ping pong between the Wi-Fi and mobile networks can cause service interruptions as well as generate considerable unnecessary signaling (e.g. towards authentication servers).

Recently, Wi-Fi has been subject to increased interest from cellular network operators, not only as an extension to fixed broadband access, but also in connection with using the Wi-Fi technology as an extension, or alternative to cellular radio access network technologies to handle the always increasing wireless bandwidth demands.

At present, a WLAN node, such as an access point, has limitations when handling traffic data from a user equipment that comprises both WLAN type traffic data (such as local breakout traffic) and cellular type traffic data (such as aggregation traffic).

EP3195642 discloses internetworking and integration of different radio access network. US 2014213219 discloses apparatus and methods for hybrid access to a core network.

### Summary

It is an aim of the present invention to provide a method and apparatus which obviate or reduce at least one or more of the disadvantages mentioned above.

According to a first aspect of the present invention there is provided a wireless local area network, WLAN, node adapted to be comprised in an integrated wireless communications network comprising a WLAN and a cellular communications network. The WLAN node comprises a receiving module adapted to receive traffic data signals from a wireless device. The WLAN node comprises a security module adapted to process the received traffic data signals and apply a first security protocol to a first WLAN traffic data signal received from the wireless device and a second security protocol to a second WLAN traffic data signal received from the wireless device. The WLAN node further comprises a routing module adapted to route the first WLAN traffic data signal to a node of the cellular communications network and route the second WLAN traffic data signal relating to local breakout traffic to a node of the WLAN. The security module is adapted to concurrently process the first WLAN traffic data signal and second WLAN traffic data signal from the same wireless device, and the routing module is adapted to concurrently route the first WLAN traffic data signal and the second WLAN traffic data signal to their respective nodes by using different frequencies for the first WLAN traffic data signal and the second WLAN traffic data signal.

According to another aspect of the present invention there is a method in a wireless local area network, WLAN, node adapted to be comprised in an integrated wireless communications network comprising a WLAN and a cellular communications network. The method comprises the steps of receiving traffic data signals from a wireless device; processing the received traffic data signals and applying a first security protocol to a first WLAN traffic data signal received from the wireless device and a second security protocol to a second WLAN traffic data signal received from the wireless device; and routing the first WLAN traffic data signal to a node of the cellular communications network and routing the second WLAN traffic data signal relating to local breakout traffic to a node of the WLAN, wherein the first WLAN traffic data signal and the second WLAN traffic data signal are processed concurrently to apply the first and second security protocols, and routed concurrently to their respective nodes, by using different frequencies for the first WLAN traffic data signal and the second WLAN traffic data signal.

According to another aspect of the present invention, there is provided a wireless device comprising a communication module adapted to communicate traffic data signals with a wireless local area network, WLAN, node, wherein the traffic data signals comprise a first WLAN traffic data signal corresponding to traffic for a cellular communications network, and a second WLAN traffic data signal for local breakout traffic of a WLAN. The communication module is adapted to: communicate a first WLAN traffic data signal using a first security protocol; and communicate a second WLAN traffic data signal using a second security protocol concurrently with the first WLAN traffic data signal by using different frequencies for the first WLAN traffic data signal and the second WLAN traffic data signal.

According to another aspect of the present invention, there is provided a method in a wireless device. The method comprises the steps of communicating traffic data signals with a wireless local area network, WLAN, node, wherein the traffic data signals comprise a first WLAN traffic data signal corresponding to traffic for a cellular communications network, and a second WLAN traffic data signal for local breakout traffic of a WLAN; wherein the first WLAN traffic data signal is communicated using a first security protocol, and the second WLAN traffic data signal communicated using a second security protocol concurrently with the first WLAN traffic data signal by using different frequencies for the first WLAN traffic data signal and the second WLAN traffic data signal.

### Brief description of the drawings

For a better understanding of examples of the present invention, and to show more clearly how the examples may be carried into effect, reference will now be made, by way of example only, to the following drawings in which:
Figure 1(a) illustrates an example of aggregation between a cellular communication network and Wireless Local Area Network, WLAN, at a Packet Data Convergence Protocol, PDCP, level;
Figure 1(b) illustrates an example of aggregation between a cellular communication network and WLAN at an Radio Link Control, RLC protocol level;
Figure 1(c) illustrates an example of aggregation between a cellular communication network and WLAN at a Medium Access Control, MAC, protocol level;
Figure 2 illustrates an example of PDCP level aggregation with a standalone access point, AP, and standalone eNB;
Figure 3 (comprising Figures 3a, 3b and 3c) describes an example of a process flow relating to WLAN that is configured to provide Robust Secure Network, RSN, authentication;
Figure 4 shows an example of a WLAN node according to an embodiment of the present invention;
Figure 5 shows an example of a method according to an embodiment of the present invention;
Figure 6 shows an example of a wireless device according to an embodiment of the present invention;
Figure 7 shows an example of a method in a wireless device, according to an embodiment of the present invention;
Figure 8a shows an example of a method in a wireless device, according to an embodiment of the present invention;
Figure 8b shows an example of a method in a wireless device, according to an embodiment of the present invention;
Figure 9a describes an example of a process flow relating to WLAN that is configured to support a legacy wireless device using a first security protocol (e.g. RSN) only, and a wireless device according to an embodiment of the present invention using first and second security protocols concurrently;
Figure 9b describes an example of a process flow relating to WLAN that is configured to support a wireless device according to an embodiment of the present invention using first and second security protocols concurrently;
Figure 9c describes another example of a process flow relating to WLAN that is configured to support a wireless device according to an embodiment of the present invention using first and second security protocols concurrently; and
Figure 10 shows an example of a network comprising a WLAN node and a wireless device according to an embodiment of the present invention.

### Detailed description

As mentioned above in the background section, Wi-Fi has recently been subject to increased interest from cellular network operators, not only as an extension to fixed broadband access, but also in connection with using the Wi-Fi technology as an extension, or alternative to cellular radio access network technologies to handle the always increasing wireless bandwidth demands. Cellular operators that are currently serving mobile users with, for example, any of the 3GPP technologies, such as LTE, UMTS/WCDMA, or GSM, consider Wi-Fi as a wireless technology that can support their regular cellular communication networks. The term "operator-controlled Wi-Fi" points to a Wi-Fi deployment that on some level is integrated with an existing cellular network operator, and where the 3GPP radio access networks and the Wi-Fi wireless network access may even be connected to the same core network and provide the same services.

There is currently quite intense activity in the area of operator-controlled Wi-Fi in several standardization organizations. In 3GPP, activities to connect Wi-Fi access points to the 3GPP-specified core network are being pursued, and in the Wi-Fi alliance, WFA, activities related to certification of Wi-Fi products are undertaken, which to some extent is also driven from the need to make Wi-Fi a viable wireless technology for cellular operators to support high bandwidth offerings in their networks. The term Wi-Fi offload is commonly used and points towards the notion of cellular network operators seeking to offload traffic from their cellular networks to Wi-Fi, for example during peak traffic times, and in situations when the cellular network, for one reason or another, needs to be off-loaded, for example to provide a requested quality of service, to maximize bandwidth or simply for coverage.

Radio Access Network (RAN) level integration is also being proposed. 3GPP is currently working on specifying a feature/mechanism for WLAN/3GPP Radio interworking which improves operator control with respect to how a user equipment performs access selection and traffic steering between 3GPP and WLANs belonging to the operator or its partners.

It is discussed that for this mechanism the RAN provides assistance parameters that assist a user equipment with the access selection. The RAN assistance information is composed of three main components, namely threshold values, an offloading preference indicator (OPI) and WLAN identifiers. A user equipment is also provided with RAN rules or policies that make use of these assistance parameters.

The threshold values can be used, for example, for metrics such as 3GPP signal related metrics, for example: Reference Signal Received Power (RSRP), Reference Signal Received Quality (RSRQ), Received Signal Code Power (RSCP), Energy per chip over the Noise (EcNo), and/or WLAN signal related metrics such as Received Channel Power Indicator (RCPI), Received Signal Strength Indicator (RSSI), WLAN load/utilization, WLAN backhaul load/capacity, and so on. One example of a RAN rule that uses the threshold value could be that a user equipment should connect to a WLAN if the RSRP is below the signaled RSRP threshold, while at the same time the WLAN RCPI is above the signaled RCPI threshold (it is also discussed that the RAN should provide thresholds for when the user equipment should steer traffic back from WLAN to 3GPP). The RAN rules/policies are expected to be specified in a 3GPP specification such as TS 36.304 v12.0.0 and/or TS 36.331 v12.1.0.

With a mechanism such as the above, it might not be wanted, or maybe not even feasible, that the terminal considers any WLAN when deciding where to steer traffic. For example, it may not be feasible that the terminal uses this mechanism to decide to steer traffic to a WLAN which does not belong to the operator. Hence it has been proposed that the RAN should also indicate to the terminal which WLANs the mechanism should be applied for, by sending WLAN identifiers.

The RAN may also provide additional parameters which are used in Access Network Discovery and Selection Function (ANDSF) policies. One proposed parameter is the offloading preference indicator (OPI). One possibility for OPI is that it is compared to a threshold in the ANDSF policy to trigger different actions. Another possibility is that OPI is used as a pointer to point, and select, different parts of the ANDSF policy which would then be used by the terminal.

The RAN assistance parameters (i.e. thresholds, WLAN identifiers, OPI) provided by RAN may be provided with dedicated signaling and/or broadcast signaling. Dedicated parameters can only be sent to the terminal when having a valid Radio Resource Control, RRC, connection to the 3GPP RAN. A terminal which has received dedicated parameters applies dedicated parameters; otherwise the terminal applies the broadcast parameters. If no RRC connection is established between the terminal and the RAN, the terminal cannot receive dedicated parameters.

In 3GPP, it has been agreed that ANDSF should be enhanced for release-12 to use the thresholds and OPI parameters that are communicated by the RAN to the user equipment, and that if enhanced ANDSF policies are provided to the user equipment, the user equipment will use the ANDSF policies instead of the RAN rules/policies (i.e. ANDSF has precedence).

Within the scope of 3GPP release-13, there has been a growing interest in realizing even tighter integration/aggregation between 3GPP and WLAN (for example, in a similar way as carrier aggregation between multiple carriers in 3GPP, where the WLAN is used just as another carrier). Such an aggregation is expected to make it possible for a more optimal aggregation opportunity as compared to Multipath Transmission Control Protocol, MPTCP, as the aggregation is performed at a lower layer and as such the scheduling and flow control of the data on the WLAN and 3GPP links can be controlled by considering dynamic radio network conditions.

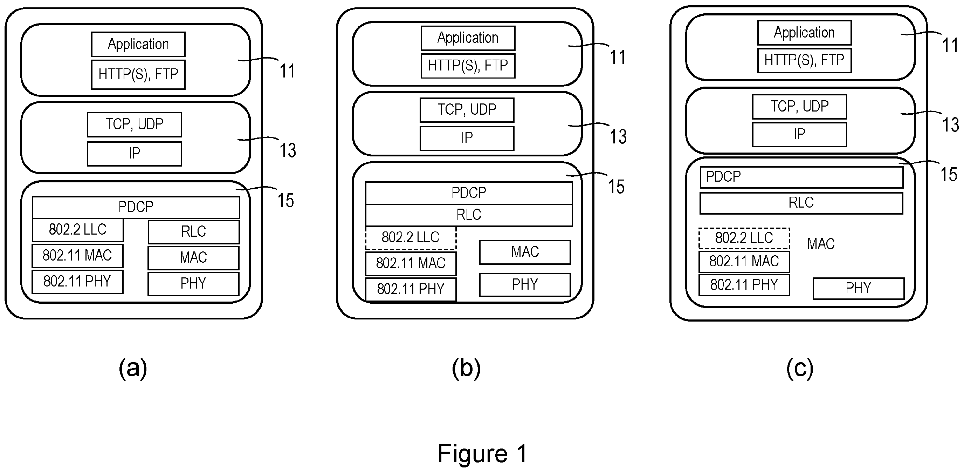

Figures 1(a), 1(b) and 1(c) illustrate different levels of integration or aggregation between a cellular communications network (such as 3GPP) and WLAN, and in particular three different protocol options of aggregation at the Packet Data Convergence Protocol (PDCP), Radio Link Control (RLC) and Medium Access Control, MAC, levels, respectively.

Figures 1(a), 1(b) and 1(c) show the main principles for these three examples of aggregation levels, although additional functionality may be needed. For example, in the PDCP level aggregation, an additional protocol layer may be used between the PDCP layer and the 802.2 Logical Link Control, LLC, layer to convey information about the user equipment and the radio bearer the traffic is associated with.

It is noted that Figures 1(a), 1(b) and 1(c) show the protocol stack at a UE or an integrated/co-located eNB-WLAN access point station. In the case of a standalone access point and eNB (i.e. whereby the access point and eNB are not co-located), the protocol stack for supporting aggregation may be different, as the LLC frames have to be relayed towards a standalone eNB in such a scenario.

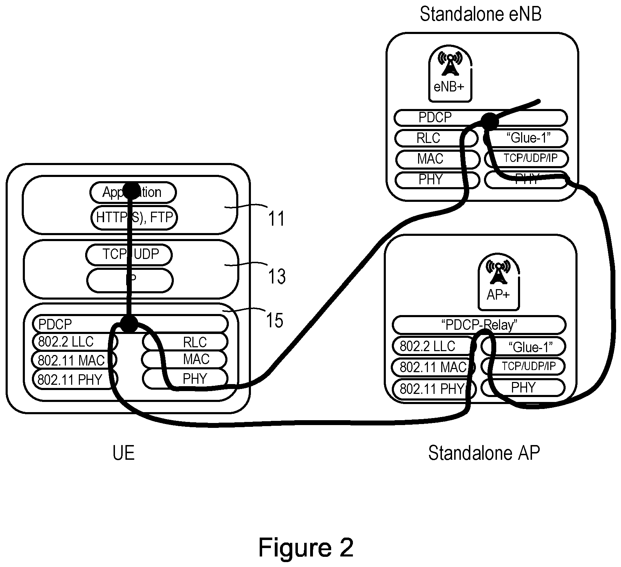

Figure 2 is an example illustrating this for the case of PDCP level aggregation.

In this case, once the LLC packet is decoded at an access point (in the uplink direction from a user equipment to the access point), and the access point realizes that this packet is a PDCP packet that has to be routed to an eNB, the forwarding can be performed via normal TCP/IP protocol stack.

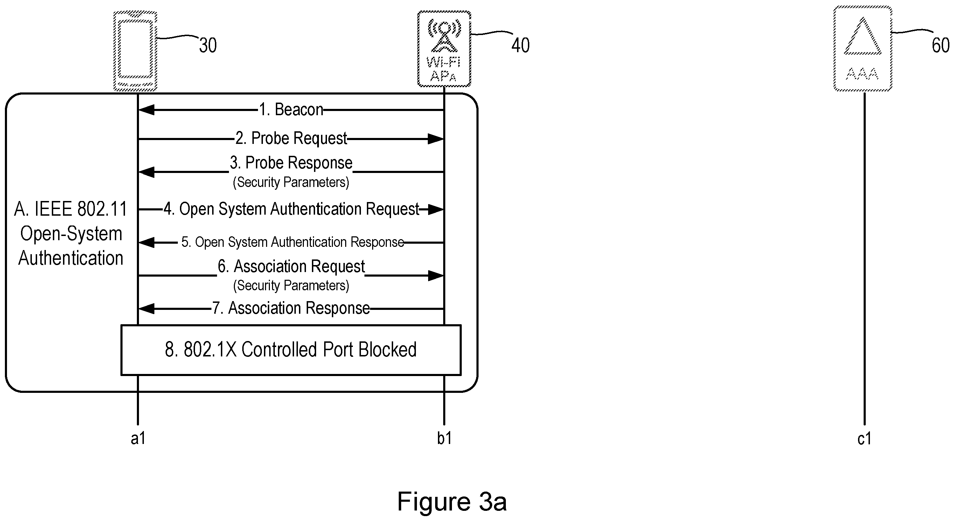

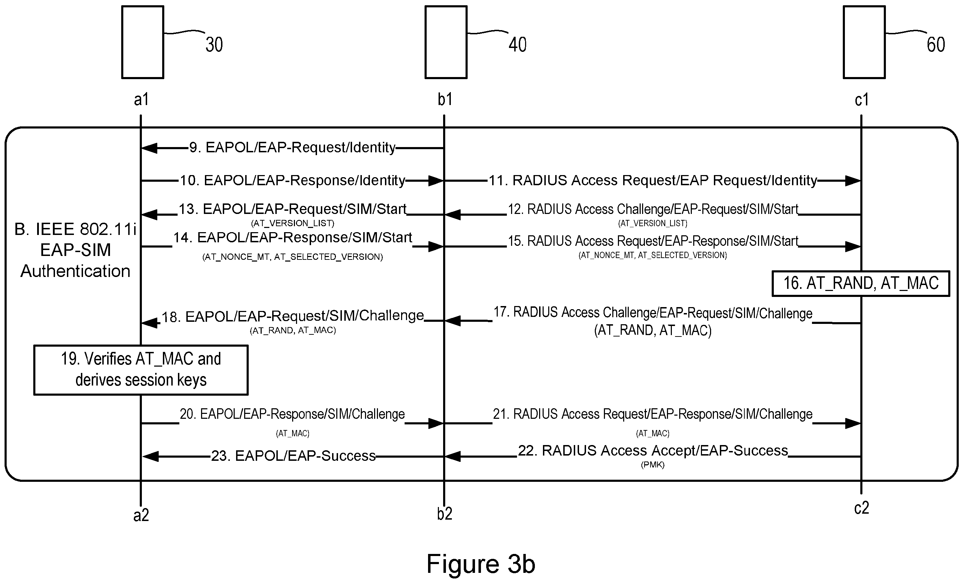

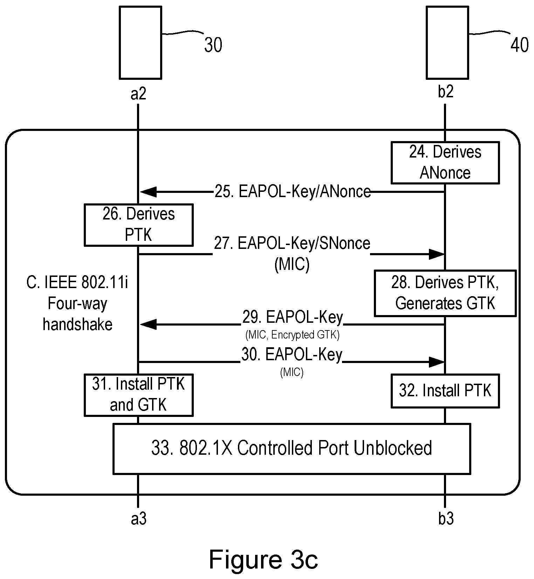

By way of further background, Figures 3(a), 3(b) and 3(c) illustrate an example of user equipment attachment and authentication procedures in a WLAN.

The authentication procedure for a user equipment (UE) or station (STA) 30 connecting to a WLAN access point (AP) 40 that employs Robust Security Network, RSN, authentication is depicted in Figures 3(a), 3(b) and 3(c).

The authentication procedure comprises the following steps.

Referring in the first instance to Figure 3a:
Step 1 - The STA 30 receives a Beacon frame revealing (among other parameters) the security features associated with the ESS the AP 40 belongs to. The format of the beacon frame as well as all the information elements it carries are described in Chapter 8.3.3.2 of IEEE 802.11, Part 11: "Wireless LAN Medium Access Control (MAC) and Physical Layer (PHY) Specifications", IEEE Std. 802.11-2012, IEEE Computer Society;
Step 2 - If the STA 30 does not receive a Beacon frame for some reason, it can generate a Probe Request and send it to the AP 40. This procedure is called active scanning and by performing it, the STA 30 can receive from the AP 40 the same information as it would have from a Beacon message. The Probe Request frame is described in Chapter 8.3.3.9 of IEEE 802.11 (Part 11, as specified above);
Step 3 - The AP 40 answers with Probe Response - IEEE 802.11 (Part 11, as specified above), Chapter 8.3.3.10; It is noted that the discovery procedure consists of either step 1 or steps 2 and 3 (i.e., receiving a Beacon frame and exchanging probe messages are mutually exclusive);
Step 4 - The STA 30 sends an Open System Authentication Request as defined in Chapter 11.2.3.2 of IEEE 802.11 (Part 11, as specified above);
Step 5 - The AP 40 responds with an Open System Authentication Response;
Step 6 - The STA 30 then sends an Association Request, indicating the security parameters to be used later;
Step 7 - The AP 40 responds with an Association Response. It is noted that the Open System Authentication does not provide any security. The connection between the STA 30 and the AP 40 is secured at a later point, by means of Authentication and Key Agreement procedure. Nevertheless, a possible attack altering the security parameters in the Open System Authentication message exchange will be detected at the stage of key derivation;
Step 8 - At this point the Open System Authentication is completed and the STA 30 can communicate only with the AP 40 - the rest of the traffic is blocked by the port-based network control (PBNC) enforcer, as defined in IEEE 802.1X. Some of the traffic towards external hosts, however, can be forwarded by the AP 40, as in the case of the communication with a RADIUS server;

Continuing onto Figure 3b:
Step 9 - This step is the first step of the Extensible Authentication Protocol Subscriber Identity Module (EAP-SIM) authentication, as described further in the Internet Engineering Task Force, IETF, RFC 4186. The AP 40 encapsulates an EAP-Request of Type 18 (SIM) inside an EAP-over-LAN (EAPOL) frame, asking the STA 30 to report its identity. In the case when the STA 30 is equipped with a SIM, the identity is the International Mobile Subscriber Identity (IMSI), followed by the "@" sign and the home realm. It is also possible for the STA 30 to include an additional "1" in front of the IMSI in order to indicate preference for the exclusive use of EAP-SIM if other EAP methods are available (e.g., EAP-AKA);
Step 10 - The STA 30 responds with its identity. An example of such is: 1234580123000100@wlan.mnc048.mcc264.3gppnetwork.org (and IMSI is in this example 234580123000100 and the preceding "1" indicates the preference to use EAP-SIM);
Step 11 - The AP 40 extracts the EAP-Response message, encapsulates it in a RADIUS frame and forwards it to the backend AAA server 60, for example part of a cellular architecture. The handling of EAP frames over RADIUS is described further by the IETF in RFC 3579;
Step 12 - The AAA server 60 recognizes the EAP method and sends an EAP-Request/SIM/Start, indicating that an EAP-SIM procedure has been initiated for that Supplicant. It also includes the list of supported SIM versions in the message as described in Chapter 10.2 of RFC 4186;
Step 13 - The AP 40 relays the EAP-Request/SIM/Start message to the STA 30;
Step 14 - The STA 30 responds with EAP-Response/SIM/Start message, which carries a random number (NONCE_MT) carried in the AT_NONCE_MT attribute (a randomly selected number), as well as the selected EAP-SIM version (AT_SELECTED_VERSION);
Step 15 - The AP 40 forwards the EAP-Response/SIM/Start to the AAA server 60;
Step 16 - The AAA server 60 obtains the GSM triplet (RAND, SRES and Kc) from the HLR/AuC and derives the keying material as specified in Chapter 7 of RFC 4186. The GSM triplet consists of:
   a) RAND - a 128-bit random number, generated by the Authentication Center (an entity within the GSM core network, used to authenticate subscribers at the point of initial attach) when a subscriber authentication is requested. Its main use is for the derivation of the Signed Response (SRES) and the Kc;
   b) SRES - a 32-bit variable, the expected response from the mobile station/STA 30 after it has been challenged with the RAND;
   c) Kc - a 64-bit ciphering key, used to encipher and decipher data transmitted between the STA 30 and the AP 40;
Step 17 - The AAA server 60 generates an EAP-Request/SIM/Challenge message, including RAND challenges and message authentication code attribute (AT_MAC). The AT_MAC derivation is based on the RAND and Kc values;
Step 18 - The AP 40 forwards the EAP-Request/SIM/Challenge message to the STA 30;
Step 19 - The STA 30 feeds the received RAND into the GSM algorithms running on the SIM and the output is a copy of the AT_MAC and a SRES value. The first thing for the STA 30 to do is to check whether the AT_MAC value received by the AAA (relayed by the AP) and the one generated by the SIM match. If so the STA continues with the authentication, otherwise it responds with an EAP-Response/SIM/Client-Error message. The second thing is to derive a new AT_MAC, based on the generated SRES;
Step 20 - The new AT_MAC is sent to the AAA server 60 (via the AP 40) in an EAP-Response/SIM/Challenge message;
Step 21 - The AP 40 forwards the EAP-Response/SIM/Challenge to the AAA server 60;
Step 22 - The AAA server 60 verifies the new AT_MAC value that the STA 30 has just sent. If the verification is successful, it sends an EAP-Success message to the AP 40. The message also carries keying material - Pairwise Master Key (PMK). The PMK is intended for the AP 40 only and it is not forwarded to the STA 30 (the STA 30 can derive the same key autonomously since it is based on the Kc, which the SIM in the STA 30 can compute based on the RAND);
Step 23 - The AP 40 forwards the EAP-Success message to the STA 30 and stores the PMK for the following Four-way handshake;

Continuing onto Figure 3c:
Step 24 - The AP 40 uses the PMK to generate an Authenticator nonce (ANonce);
Step 25 - The ANonce value is sent to the STA 30 in an EAPOL-Key message;
Step 26 - Using the received ANonce (together with the SNonce and the PMK), the STA 30 constructs the Pairwise Temporal Key (PTK);
Step 27 - The STA 30 sends an EAPOL-Key message to the AP 40, including a Supplicant nonce (SNonce) and a message integrity code (MIC);
Step 28 - The AP 40 uses the ANonce, SNonce and the PMK to construct the PTK. The AP 40 also uses the MIC in order to verify that the STA 30 has computed the correct and fresh key. Furthermore, the AP 40 also generates and installs a Group Temporal Key (GTK, which is used exclusively for the encryption and decryption of broadcast and multicast traffic;
Step 29 - The AP 40 sends to the STA 30 an encrypted GTK, a sequence number to use for the next broadcast message and an instruction to install the PTK (the message is integrity protected by another MIC);
Step 30 - The STA 30 responds with an acknowledgement message;
Step 31 - The STA 30 installs both the PTK and the GTK and as of this point uses them to encrypt and decrypt all communication;
Step 32 - The AP 40 also installs the PTK;
Step 33 - The 802.1X Controlled Port is now open and the STA 30 can communicate with other network hosts besides the AP 40.

In some situations, WLAN network nodes (e.g. Access Points 40) will need to support both aggregation traffic and local breakout traffic simultaneously from the same user equipment or station, (aggregation traffic, for example, being traffic that forms part of traffic intended for a cellular network, and local breakout traffic, for example, being traffic that is for use in the WLAN).

For example, currently some proposals for WLAN systems used for access aggregation with 3GPP may not use WLAN security mechanisms (including authentication and data integrity protection), but instead rely on the security features provided by higher layer 3GPP protocols (e.g., PDCP) for the aggregation traffic. However, at the same time the WLAN system routes non-aggregation local breakout traffic (e.g., to the Internet), which also needs to be secured.

The embodiments of the present invention, as described herein, provide a single WLAN access point that supports a first type of traffic routing to a first node (for example non-protected traffic routing to an aggregator, for example an eNB of a cellular network, while at the same time supporting a second type of traffic routing to a second node, (for example protected local breakout traffic routing for the same wireless device).

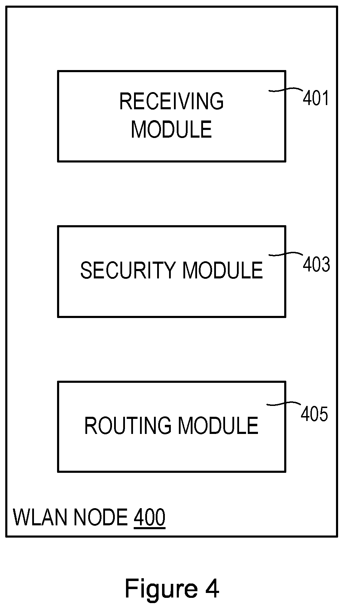

Figure 4 shows an example of a wireless local area network, WLAN, node 400 according to an embodiment of the present invention. The WLAN node 400 is adapted to be comprised in an integrated wireless communications network comprising a WLAN and a cellular communications network. The WLAN node 400 comprises a receiving module 401, a security module 403 and a routing module 405. The receiving module 401 is adapted to receive traffic data signals from a wireless device. The security module 403 is adapted to process the received traffic data signals and apply a first security protocol to a first traffic data signal received from the wireless device and a second security protocol to a second traffic data signal received from the wireless device. The routing module 405 is adapted to route the first traffic data signal to a node of the cellular communications network and route the second traffic data signal to a node of the WLAN.

By being able to handle two traffic flows with different security levels (e.g. different security levels, or no security for 3GPP network traffic and security for local WLAN traffic), this enables the WLAN node 400 to handle both types of traffic simultaneously with the same wireless device.

As such, according to an embodiment of the present invention, there is provided a mechanism which allows a WLAN access node, or an Access Point (AP) to provide different security mechanisms for different traffic flows from the same user equipment or wireless device. For example, the WLAN node can employ no security (or OSA) for traffic that is routed towards a 3GPP aggregator node (e.g., an eNB, i.e. because this traffic already has its own in-build encryption) and at the same time use security for traffic that is intended for local breakout (e.g., the WLAN node can be a part of a Robust Security Network, RSN for the local breakout traffic).

According to one embodiment, the security module 403 is adapted to concurrently process the first traffic data signal and second traffic data signal from the same wireless device, and the routing module 405 is adapted to concurrently route the first traffic data signal and the second traffic data signal to their respective nodes. By concurrently it is meant that the WLAN node 400 is able to handle at least first and second traffic data signals at the same time with the same wireless device, and wherein the at least first and second traffic data signals are protected using different security or protection mechanisms. The references to concurrently do not necessarily require the processing to be carried out exactly in parallel or simultaneously, but include being able to process the different types of traffic data signals in an interleaved manner during a communication session between a wireless device and a WLAN node. In an example where a WLAN node 400 is able to handle at least first and second traffic data signals simultaneously with the same wireless device, this may involve, for example, using different frequencies for the different traffic types, such that the transmission of both traffic types is in parallel.

According to one embodiment the first security protocol comprises a security mechanism which is different to the security mechanism of the second security protocol. In one embodiment, the first security protocol comprises a security mechanism which has a lower level of security than the second security protocol, or vice versa. In one embodiment, the first security protocol comprises a level of encryption that is lower than a level of encryption of the second security protocol, or vice versa, In another embodiment, the first security protocol comprises a level of authentication which is lower than the level of authentication of the second security protocol, or vice versa.

For example, the first security protocol may comprise an Open System Authentication, OSA, security protocol.

In another example, the first security protocol comprises no additional security over and above a security protocol already provided in a received first traffic data signal. For example, if the first traffic data signal comprises cellular type traffic already comprising some from of encryption (for example aggregation traffic), the security module 403 is able to process that first traffic data signal without adding any further form of protection or security, and route the first traffic data signal to a node of a cellular network, e.g. an aggregation node.

In one example, the second security protocol comprises a Robust Secure Network, RSN, security protocol.

When two different security mechanisms are applied to two different traffic flows, an embodiment of the invention includes the option to derive the security associations from two different authentication protocol runs (potentially using separate credentials for the authentication).

According to a further aspect of the present invention, the security module 403 is further adapted to advertise the concurrent authentication capabilities of the WLAN node to other nodes or devices. For example, in this way a WLAN node 400, such as an Access Point, can indicate to other devices (such as a wireless device) that it can handle different types of traffic simultaneously, for example aggregation traffic and local breakout traffic simultaneously.

In one embodiment the security module 403 is adapted to advertise that it supports Robust Secure Network, RSN, authentication as the form of second security protocol for the second traffic data signals being routed to a node of the WLAN, and unencrypted communication as the first security protocol for the first traffic data signals being routed to a node of the cellular communications network. In this manner a WLAN node can advertise that it supports RSN authentication for local break out traffic when aggregation is ongoing.

In this example a WLAN node 400 can therefore advertise that it supports two authentication types, for example by advertising the RSN Element (RSNE) when it is part of a RSN, and besides this also advertising that it supports exchange of unencrypted aggregation traffic.

The security module 403 may be adapted to advertise its first security protocol capability and/or second security protocol capability using, for example, an information element comprising an Aggregation Security Element, ASG. In another example the security module 403 is adapted to advertise its first security protocol capability and/or second security protocol capability using a modified Robust Secure Network element, RSNE.

With regard to delivery of the advertisement, according to one embodiment, the security module 403 is adapted to advertise its first security protocol capability and/or second security protocol capability using an information element provided within a data frame, or a beacon signal, or a probe request response signal, or an authentication request/response signal, or a vendor specific information element. As such, an ASE can be specified, for example, as an IEEE 802.11 Information Element or as a vendor specific element (if for example it is defined in organizations outside of IEEE, e.g., the Wi-Fi Alliance, WFA).

Examples of the type of information that may be contained in the ASE are shown below:
Aggregation traffic is exchanged without over-the-air encryption, no additional authentication required;
Aggregation traffic is exchanged without over-the-air encryption, additional authentication required;
Aggregation traffic is exchanged with over-the-air encryption;
Aggregation traffic is exchanged with over-the-air encryption, provided by RSN mechanisms;
Information pertaining to the type of authentication and data integrity mechanisms used (e.g., cypher suits).

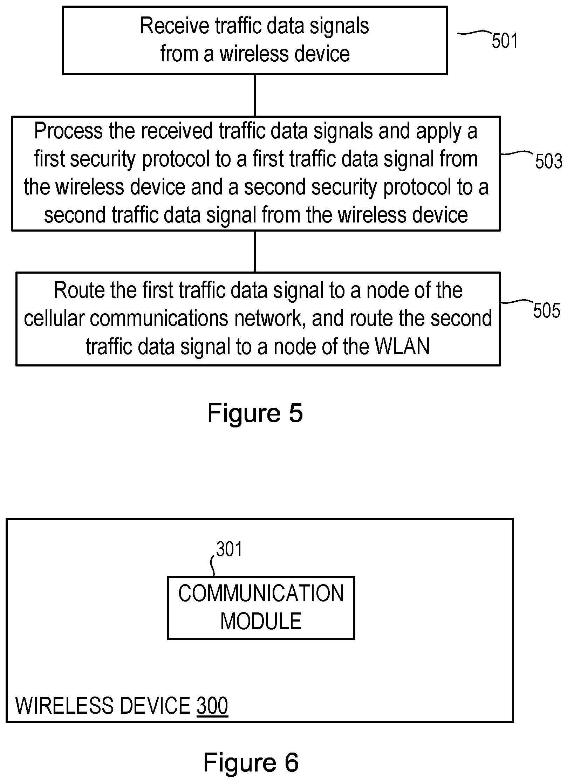

Figure 5 shows a method in a wireless local area network, WLAN, node according to another embodiment of the present invention, the WLAN node being adapted to be comprised in an integrated wireless communications network comprising a WLAN and a cellular communications network. The method comprises receiving traffic data signals from a wireless device, step 501. The received traffic data signals are processed, and a first security protocol applied to a first traffic data signal received from the wireless device and a second security protocol applied to a second traffic data signal received from the wireless device, step 503. The first traffic data signal is routed to a node of the cellular communications network and the second traffic data signal routed to a node of the WLAN, step 505.

In one embodiment, the first traffic data signal and the second traffic data signal are processed concurrently to apply the first and second security protocols, and routed concurrently to their respective nodes. As mentioned above, by concurrently it is meant that the WLAN node is able to handle at least first and second traffic data signals at the same time with the same wireless device, and wherein the at least first and second traffic data signals are protected using different security or protection mechanisms. The references to concurrently do not necessarily require the processing to be carried out in parallel or simultaneously, but include being able to process the different types of traffic data signals in an interleaved manner during a communication session between a wireless device and a WLAN node.

The method may comprise the step of advertising concurrent authentication capabilities of the WLAN node to other nodes or devices.

Figure 6 shows a wireless device 300 according to an embodiment of the present invention. The wireless device 300 comprises a communication module 301 adapted to communicate traffic data signals with a wireless local area network, WLAN, node. The communication module 301 is adapted to communicate a first traffic data signal using a first security protocol, and communicate a second traffic data signal using a second security protocol.

The wireless device 300 is adapted to communicate first and second traffic data signals with the same WLAN node concurrently, the first and second traffic data signals having different security protocols.

In one embodiment, the communication module 301 may be adapted to communicate the first traffic data signal using a first security protocol which comprises non-encrypted communication, and communicate the second traffic data signal using a second security protocol which comprises a Robust Secure Network, RSN, authentication procedure.

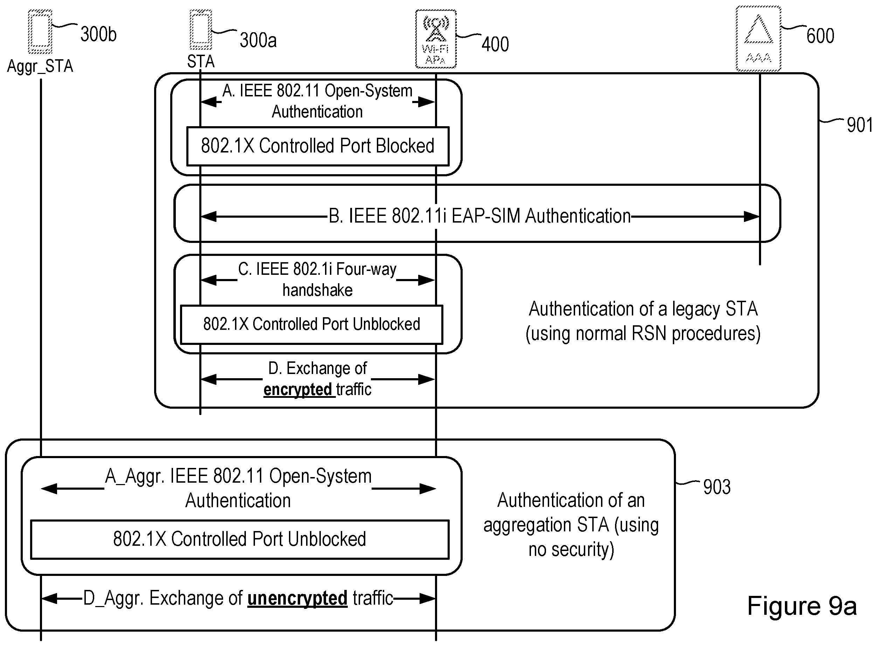

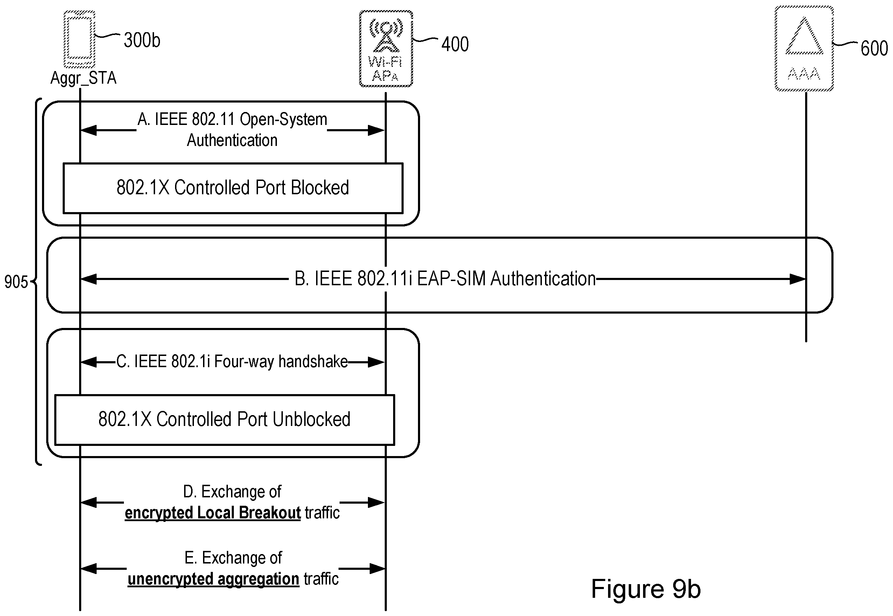

For example, in this manner, the wireless device may associate with a WLAN node using RSN authentication only, and send only cellular or 3GPP data (e.g. aggregation frames) without over-the-air-encryption, such that there is no need to change the existing standard, i.e. since the wireless device only uses RSN with a WLAN node. Further details of such an embodiment will be described later in connection with Figures 9a and 9b.

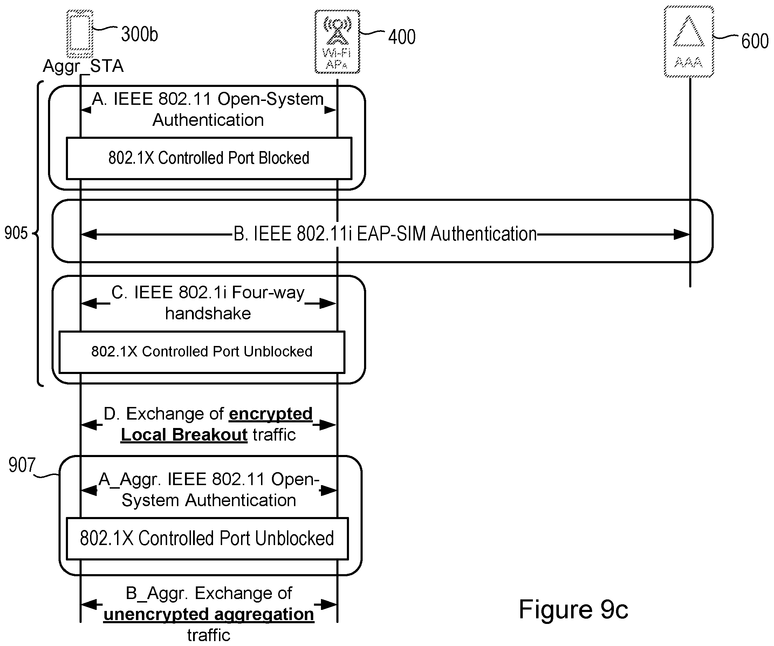

In another embodiment, the communication module 301 is adapted to communicate the first traffic data signal using a first security protocol which comprises Open System Authentication, OSA, and communicate the second traffic data signal using a second security protocol which comprises a Robust Secure Network, RSN, authentication procedure. Here, a wireless device is able to authenticate with a WLAN node using several different authentication mechanisms concurrently. For example, OSA is used for traffic which is ultimately forwarded by a WLAN node (Access Point) to a 3GPP node, and RSN for traffic which is ultimately forwarded by an Access Point to a local WLAN node. Further details of this embodiment will be described further below in relation to Figure 9c.

The communication module 301 may be adapted to communicate the first and second traffic data signals using the first and second security protocols, in response to previously receiving an advertisement from the WLAN node, indicating the capability of the WLAN node to receive the first and second traffic data signals having different security protocols.

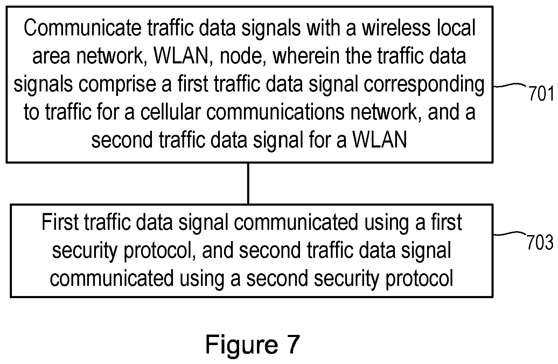

Figure 7 shows a method in a wireless device, according to another embodiment of the present invention. The method comprises communicating traffic data signals with a wireless local area network, WLAN, node, wherein the traffic data signals comprise a first traffic data signal corresponding to traffic for a cellular communications network, and a second traffic data signal for a WLAN, step 701. The first traffic data signal is communicated using a first security protocol, and the second traffic data signal communicated using a second security protocol, step 703.

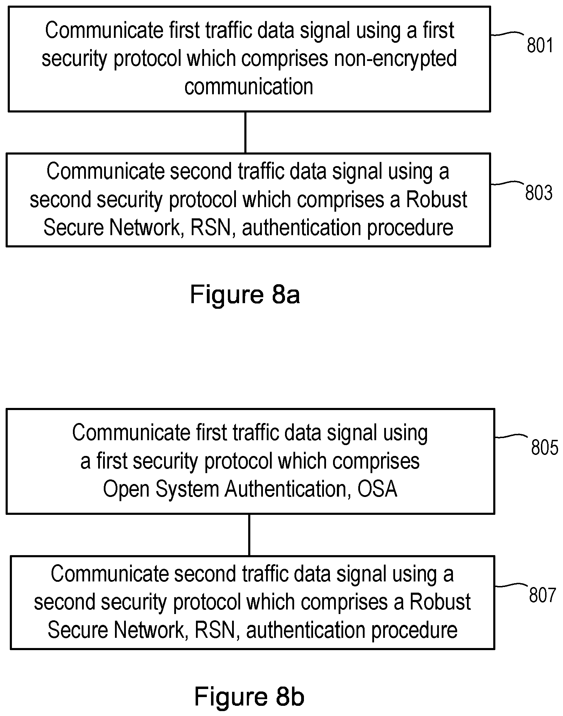

According to one embodiment illustrated in Figure 8a, the method comprises the steps of communicating the first traffic data signal using a first security protocol which comprises non-encrypted communication, step 801, and communicating the second traffic data signal using a second security protocol which comprises a Robust Secure Network, RSN, authentication procedure, step 803. Further details of such an embodiment will be described later in connection with Figures 9a and 9b.

According to another embodiment illustrated in Figure 8b, the method comprises communicating the first traffic data signal using a first security protocol which comprises Open System Authentication, OSA, step 805, and communicating the second traffic data signal using a second security protocol which comprises a Robust Secure Network, RSN, authentication procedure, step 807. Further details of this embodiment will be described further below in relation to Figure 9c.

Figure 9a shows an example message flow for the authentication of a legacy wireless device 300a and an aggregation wireless device 300b. It is noted that, to simplify the flow-chart in Figure 9a, the aggregation wireless device 300b is not shown running any local break out traffic flows. In this case, the WLAN node 400 will need to be able to make a difference between a legacy wireless device 300a and an aggregation wireless device 300b (whereby a wireless device will need to report its aggregation capabilities to the WLAN node 400, for example as described in PCT/SE2014/51262 by the present Applicant). In Figure 9a, the exchange of message flows bounded by the dotted box 901 relate to those of authentication with a legacy wireless device 300a using, for example, normal RSN procedures, while the exchange of message flows bounded by dotted box 903 relate to authentication of an aggregation wireless device 300b, whereby aggregation traffic is exchanged between the WLAN node 400 and the aggregation wireless device 300b using, for example, no security. As mentioned above, according to embodiments of the present invention, the aggregation device 300b is also be able to communicate with the WLAN node 400 using a different security protocol, for example RSN authentication, as will be described further in Figures 9b and 9c.

Referring to Figure 9b, this expands on the message flows of the aggregation wireless device 300b of Figure 9a, and shows an example of message flows corresponding to the option described above in Figure 8a, i.e. whereby a wireless device 300 associates to a WLAN node (e.g. AP) using just one security protocol, for example RSN authentication, and then sends only the first traffic data signal flows, for example cellular type traffic, such as aggregation frames, without over-the-air encryption. The message flows labeled 905 correspond to the wireless device 300b setting up a security protocol with the WLAN node 400, for example setting up an RSN authentication. Then, local breakout traffic is exchanged using this security protocol, such that encrypted local breakout traffic is exchanged between the wireless device 300b and the WLAN node 400. However, aggregation traffic is exchanged in unencrypted mode, e.g. since no encryption is required because the aggregation traffic already has its own in-built security mechanism.

Figure 9c shows an example according to another embodiment, corresponding to the embodiment described above in Figure 8b. This embodiment supports two (or more) different concurrent authentications between a single WLAN node 400 and a single wireless device or user equipment (station) 300b, for example a WLAN node that supports both OSA and RSN simultaneously. Therefore, a wireless device 300b can authenticate and associate to said WLAN node using either security mechanism, or in the case where they are aggregating wireless devices, both security mechanisms simultaneously. The message flows labeled 905 correspond to the wireless device 300b setting up a first security protocol with the WLAN node 400, for example setting up an RSN authentication, and the message flows 907 correspond to the wireless device 300b setting up a second security protocol with the WLAN node 400, for example setting up OSA.

Thus, in the example of Figure 9c a wireless device is provided with the option of authenticating to a WLAN node (AP) using several different authentication mechanisms concurrently, e.g. one OSA and one RSN. The scenario is similar to the one in Figure 9b, but the process flow is different. In this case, the wireless device 300b will use two different authentications simultaneously - one for the local breakout traffic and one for the aggregation traffic. This option may be implemented in IEEE 802.11 standards, by allowing for one wireless device 300 to have multiple concurrent authentications to the same WLAN node or access point. In this case, the WLAN node is adapted to maintain two different state machines, one for each type of traffic. The WLAN node can advertise the requirement for a wireless device to complete two or more authentications, for example in the ASE as mentioned above.

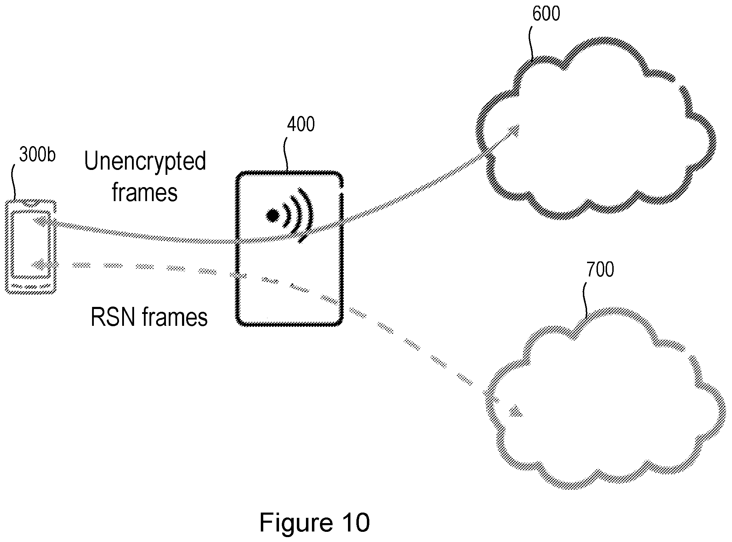

Figure 10 shows an example of a network comprising a WLAN node 400 (such as an access point) and a wireless device 300 according to embodiments described herein. The WLAN node 400 is able to still provide secure communication to legacy wireless devices as usual, for example by using a second security protocol, such as RSN frames in the example, for local breakout traffic, for example WLAN traffic which is being routed to the Internet 700. However, as discussed above, for aggregation wireless devices 300b that send aggregation traffic, such traffic can be exchanged between the WLAN 400 and the wireless device 300 without over-the-air encryption. This option illustrated in the example of Figure 10 has no impact on legacy wireless devices, since they will observe the WLAN node 400 as a normal RSN WLAN node.

According to the embodiments described herein, two different traffic types that a wireless station has, for example aggregation traffic and local breakout traffic, are treated differently when it comes to security.

An embodiment provides a method of operating a WLAN access point capable of maintaining a first and a second protection mechanism with a wireless device. In one embodiment a method comprises announcing which protection mechanisms are supported by the WLAN access point, protecting a first type of traffic received from the device using the first protection mechanism, protecting a second type of traffic received from the device using the second protection mechanism, and forwarding the first type of traffic to a 3GPP aggregation function.

According to another aspect of the present invention, there is provided a computer program, comprising instructions which, when executed on at least one processor, causes the at least one processor to carry out the method according to any one of the embodiments described above, and as defined in the appended claims.

According to another aspect of the present invention, there is provided a carrier comprising such a computer program, wherein the carrier is one of an electronic signal, optical signal, radio signal or computer readable storage medium.

It is noted that the embodiments described can overcome a problem whereby a WLAN AP has to provide capabilities and route traffic for two different purposes: one for the 3GPP aggregation and one for the local break out (e.g., Internet traffic or access to a home or enterprise network). Since the 3GPP aggregation traffic is secured by higher player protocols (i.e., the PDCP) no security (or lower form of security) is needed over the WLAN air interface for the traffic that is routed towards the 3GPP aggregator (the traffic between the WLAN AP and the 3GPP aggregator could be protected by, e.g., IPsec to ensure that only traffic from authorized APs are allowed to reach the 3GPP aggregator). In the case no security is applied to the aggregation flow over-the-air, the WLAN AP can be configured to use OSA for authentication for these flows. In the embodiments a WLAN AP is able to separate between which flows are aggregation flows. However, the local breakout traffic is not protected by 3GPP security, and hence the WLAN AP is able to provide security for this traffic over the air interface.

In the embodiments described above the first traffic data signal is described as comprising at least part of an aggregation signal for a cellular communications network, and the second traffic data signal described as comprising a local breakout signal of the WLAN. It is noted, however, that the first and second traffic data signals may comprise any form of different traffic signals.

The embodiments of the present invention allow the same user equipment, wireless device or station to run some flows as aggregation flows and other flows as local break out flows, i.e. simultaneously from the same user equipment.

The embodiments describe a mechanism which allows a WLAN access node, or an Access Point (AP) to provide different security mechanisms for different traffic flows from the same user equipment or wireless device. For example, the AP can employ no security (or OSA) for traffic that is routed towards a 3GPP aggregator node (e.g., an eNB) and at the same time use security for traffic that is intended for local breakout (e.g., the AP can be a part of a Robust Security Network, RSN for the local breakout traffic).

The embodiments of the present invention therefore provide a technical solution, which enables a network node, such as a WLAN access point, to allow for multiple different authentications simultaneously towards a single user equipment or station or wireless device. As such, it can be assured that local breakout traffic is secured in terms of confidentiality and integrity, without imposing unnecessary security processing on other traffic, such as aggregation traffic, which already has sufficient security an integrity.

Although the embodiments refer to supporting first and second security protocols, it is noted that a wireless device may support several authentications to the same WLAN node or access point simultaneously:
It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A wireless local area network, WLAN, node (400) adapted to be comprised in an integrated wireless communications network comprising a WLAN and a cellular communications network, the WLAN node (400) comprising:
a receiving module (401) adapted to receive traffic data signals from a wireless device;
a security module (403) adapted to process the received traffic data signals and apply a first security protocol to a first WLAN traffic data signal received from the wireless device and a second security protocol to a second WLAN traffic data signal received from the wireless device; and
a routing module (405) adapted to route the first WLAN traffic data signal to a node of the cellular communications network and route the second WLAN traffic data signal relating to local breakout traffic to a node of the WLAN, wherein the security module is adapted to concurrently process the first WLAN traffic data signal and second WLAN traffic data signal from the same wireless device, and the routing module (405) is adapted to concurrently route the first WLAN traffic data signal and the second WLAN traffic data signal to their respective nodes by using different frequencies for the first WLAN traffic data signal and the second WLAN traffic data signal.

2. A WLAN node as claimed in claim 1 wherein:
the first security protocol comprises a security mechanism which is different to the security mechanism of the second security protocol; or
the first security protocol comprises a security mechanism which has a lower level of security than the second security protocol, or vice versa
the first security protocol comprises a level of encryption that is lower than a level of encryption of the second security protocol, or vice versa; or
the first security protocol comprises a level of authentication which is lower than the level of authentication of the second security protocol, or vice versa.

3. A WLAN node (400) as claimed in any one of the preceding claims, wherein the first security protocol comprises an Open System Authentication, OSA, security protocol.

4. A WLAN node (400) as claimed in any one of claims 1 to 2, wherein the first security protocol comprises no additional security over and above a security protocol already provided in a received first WLAN traffic data signal.

5. A WLAN node (400) as claimed in any one of the preceding claims, wherein the second security protocol comprises a Robust Secure Network, RSN, security protocol.

6. A WLAN node (400) as claimed in any one of the preceding claims, wherein the security module (403) is further adapted to advertise concurrent authentication capabilities of the WLAN node to other nodes or devices.

7. A WLAN node (400) as claimed in claim 6, wherein the security module (403) is adapted to advertise that it supports:
Robust Secure Network, RSN, authentication as the form of second security protocol for the second WLAN traffic data signals being routed to a node of the WLAN; and
unencrypted communication as the first security protocol for the first WLAN traffic data signals being routed to a node of the cellular communications network.

8. A WLAN node (400) as claimed in claim 6 or 7, wherein the security module (403) is adapted to advertise its first security protocol capability and/or second security protocol capability using:
an information element comprising an Aggregation Security Element, ASG; or
a modified Robust Secure Network element, RSNE.

9. A WLAN node (400) as claimed in claim 8, wherein the security module (403) is adapted to advertise its first security protocol capability and/or second security protocol capability using:
an information element provided within a data frame, or a beacon signal, or a probe request response signal, or an authentication request/response signal; or
a vendor specific information element.

10. A WLAN node (400) as claimed in any one of the preceding claims, wherein the first WLAN traffic data signal comprises at least part of an aggregation signal for a cellular communications network.

11. A method in a wireless local area network, WLAN, node adapted to be comprised in an integrated wireless communications network comprising a WLAN and a cellular communications network, the method comprising:
receiving traffic data signals from a wireless device (step 501);
processing the received traffic data signals and applying a first security protocol to a first WLAN traffic data signal received from the wireless device and a second security protocol to a second WLAN traffic data signal received from the wireless device (step 503); and
routing the first WLAN traffic data signal to a node of the cellular communications network and routing the second WLAN traffic data signal relating to local breakout traffic to a node of the WLAN (step 505), wherein the first WLAN traffic data signal and the second WLAN traffic data signal are processed concurrently to apply the first and second security protocols, and routed concurrently to their respective nodes, by using different frequencies for the first WLAN traffic data signal and the second WLAN traffic data signal.

12. A method as claimed in claim 11, further comprising the step of advertising authentication capabilities of the WLAN node to other nodes or devices.

13. A wireless device (500) comprising:
a communication module (501) adapted to communicate traffic data signals with a wireless local area network, WLAN, node, wherein the traffic data signals comprise a first WLAN traffic data signal corresponding to traffic for a cellular communications network, and a second WLAN traffic data signal for local breakout traffic of a WLAN, wherein the communication module is adapted to:
communicate a first WLAN traffic data signal using a first security protocol; and communicate a second WLAN traffic data signal using a second security protocol concurrently with the first WLAN traffic data signal by using different frequencies for the first WLAN traffic data signal and the second WLAN traffic data signal.

14. A wireless device (500) as claimed in claim 13, wherein the communication module (501) is adapted to:
communicate the first WLAN traffic data signal using a first security protocol which comprises non-encrypted communication; and
communicate the second WLAN traffic data signal using a second security protocol which comprises a Robust Secure Network, RSN, authentication procedure.

15. A wireless device (500) as claimed in claim 13, wherein the communication module (501) is adapted to:
communicate the first WLAN traffic data signal using a first security protocol which comprises Open System Authentication, OSA; and
communicate the second WLAN traffic data signal using a second security protocol which comprises a Robust Secure Network, RSN, authentication procedure.

16. A wireless device (500) as claimed in any one of claims 13 to 15, wherein the communication module (501) is adapted to communicate the first and second WLAN traffic data signals using the first and second security protocols, in response to previously receiving an advertisement from the WLAN node, indicating the capability of the WLAN node to receive the first and second WLAN traffic data signals having different security protocols.

17. A method in a wireless device, the method comprising:
communicate traffic data signals with a wireless local area network, WLAN, node, wherein the traffic data signals comprise a first WLAN traffic data signal corresponding to traffic for a cellular communications network, and a second WLAN traffic data signal for local breakout traffic of a WLAN (step 701);
wherein the first WLAN traffic data signal is communicated using a first security protocol, and the second WLAN traffic data signal communicated using a second security protocol (step 703) concurrently with the first WLAN traffic data signal by using different frequencies for the first WLAN traffic data signal and the second WLAN traffic data signal.

18. A method as claimed in claim 17, comprising the steps of:
communicating the first WLAN traffic data signal using a first security protocol which comprises non-encrypted communication (step 801), and communicating the second WLAN traffic data signal using a second security protocol which comprises a Robust Secure Network, RSN, authentication procedure (step 803); or
communicating the first WLAN traffic data signal using a first security protocol which comprises Open System Authentication, OSA (step 805), and communicating the second WLAN traffic data signal using a second security protocol which comprises a Robust Secure Network, RSN, authentication procedure (step 807).

19. A computer program, comprising instructions which, when executed on at least one processor, causes the at least one processor to carry out the method according to any one of claims 11 to 12.

20. A computer program, comprising instructions which, when executed on at least one processor, causes the at least one processor to carry out the method according to any one of claims 17 to 18.

21. A carrier comprising the computer program of claim 19 or 20, wherein the carrier is one of an electronic signal, optical signal, radio signal or computer readable storage medium.

## Patentansprüche

1. Knoten (400) eines drahtlosen lokalen Netzwerks, WLAN, der ausgelegt ist, um in einem integrierten drahtlosen Kommunikationsnetzwerk umfasst zu sein, das ein WLAN und ein zellulares Kommunikationsnetzwerk umfasst, wobei der WLAN-Knoten (400) umfasst:
ein Empfangsmodul (401), das zum Empfangen von Verkehrsdatensignalen von einer drahtlosen Vorrichtung ausgelegt ist;
ein Sicherheitsmodul (403), das so ausgelegt ist, dass es die empfangenen Verkehrsdatensignale verarbeitet und ein erstes Sicherheitsprotokoll auf ein erstes WLAN-Verkehrsdatensignal, das von der drahtlosen Vorrichtung empfangen wird, und ein zweites Sicherheitsprotokoll auf ein zweites WLAN-Verkehrsdatensignal anwendet, das von der drahtlosen Vorrichtung empfangen wird; und
ein Routing-Modul (405), das zum Leiten des ersten WLAN-Verkehrsdatensignals zu einem Knoten des zellularen Kommunikationsnetzwerks und Leiten des zweiten WLAN-Verkehrsdatensignals in Bezug auf Local-Breakout-Verkehr zu einem Knoten des WLANs ausgelegt ist, wobei das Sicherheitsmodul zum gleichzeitigen Verarbeiten des ersten WLAN-Verkehrsdatensignals und des zweiten WLAN-Verkehrsdatensignals von der gleichen drahtlosen Vorrichtung ausgelegt ist, und das Routing-Modul (405) zum gleichzeitigen Leiten des ersten WLAN-Verkehrsdatensignals und des zweiten WLAN-Verkehrsdatensignals zu ihren jeweiligen Knoten durch Verwenden verschiedener Frequenzen für das erste WLAN-Verkehrsdatensignal und das zweite WLAN-Verkehrsdatensignal ausgelegt ist.

2. WLAN-Knoten nach Anspruch 1, wobei:
das erste Sicherheitsprotokoll einen Sicherheitsmechanismus umfasst, der vom Sicherheitsmechanismus des zweiten Sicherheitsprotokolls verschieden ist; oder
das erste Sicherheitsprotokoll einen Sicherheitsmechanismus umfasst, der eine niedrigere Sicherheitsstufe als das zweite Sicherheitsprotokoll aufweist, oder umgekehrt
das erste Sicherheitsprotokoll eine Verschlüsselungsstufe umfasst, die niedriger als eine Verschlüsselungsstufe des zweiten Sicherheitsprotokolls ist, oder umgekehrt; oder
das erste Sicherheitsprotokoll eine Authentisierungsstufe umfasst, die niedriger als die Authentisierungsstufe des zweiten Sicherheitsprotokolls ist; oder umgekehrt.

3. WLAN-Knoten (400) nach einem der vorhergehenden Ansprüche, wobei das erste Sicherheitsprotokoll ein Open System Authentication, OSA,-Sicherheitsprotokoll umfasst.

4. WLAN-Knoten (400) nach einem der Ansprüche 1 bis 2, wobei das erste Sicherheitsprotokoll keine zusätzliche Sicherheit über ein Sicherheitsprotokoll hinaus umfasst, das bereits in einem empfangenen ersten WLAN-Verkehrsdatensignal vorgesehen ist.

5. WLAN-Knoten (400) nach einem der vorhergehenden Ansprüche, wobei das zweite Sicherheitsprotokoll ein Robust Secure Network, RSN,-Sicherheitsprotokoll umfasst.

6. WLAN-Knoten (400) nach einem der vorhergehenden Ansprüche, wobei das Sicherheitsmodul (403) ferner zum Bekanntgeben von Fähigkeiten zur gleichzeitigen Authentisierung des WLAN-Knotens für andere Knoten oder Vorrichtungen ausgelegt ist.

7. WLAN-Knoten (400) nach Anspruch 6, wobei das Sicherheitsmodul (403) so ausgelegt ist, dass es bekanntgibt, dass er Folgendes unterstützt:
Robust Secure Network, RSN,-Authentisierung als die Form eines zweiten Sicherheitsprotokolls für die zweiten WLAN-Verkehrsdatensignale, die zu einem Knoten des WLANs geleitet werden; und
unverschlüsselte Kommunikation als das erste Sicherheitsprotokoll für die ersten WLAN-Verkehrsdatensignale, die zu einem Knoten des zellularen Kommunikationsnetzwerk geleitet werden.

8. WLAN-Knoten (400) nach Anspruch 6 oder 7, wobei das Sicherheitsmodul (403) so ausgelegt ist, dass es seine Fähigkeit für das erste Sicherheitsprotokoll und/oder seine Fähigkeit für das zweite Sicherheitsprotokoll unter Verwendung von Folgendem bekanntgibt:
einem Informationselement, das ein Aggregation Security Element, ASG; umfasst;
ein modifiziertes Robust-Secure-Network-Element, RSNE.

9. WLAN-Knoten (400) nach Anspruch 8, wobei das Sicherheitsmodul (403) so ausgelegt ist, dass es seine Fähigkeit für das erste Sicherheitsprotokoll und/oder seine Fähigkeit für das zweite Sicherheitsprotokoll unter Verwendung von Folgendem bekanntgibt:
einem Informationselement, das innerhalb eines Datenrahmens oder eines Bakensignals oder eines Sondierungsanforderungs-/-antwortsignals oder eines Authentisierungsanforderungs-/-antwortsignals vorgesehen ist; oder
einem anbieterspezifischen Informationselement.

10. WLAN-Knoten (400) nach einem der vorhergehenden Ansprüche, wobei das erste WLAN-Verkehrsdatensignal mindestens einen Teil eines Aggregationssignals für ein zellulares Kommunikationsnetzwerk umfasst.

11. Verfahren in einem Knoten eines drahtlosen lokalen Netzwerks, WLAN, der ausgelegt ist, um in einem integrierten drahtlosen Kommunikationsnetzwerk umfasst zu sein, das ein WLAN und ein zellulares Kommunikationsnetzwerk umfasst, wobei das Verfahren umfasst:
Empfangen von Verkehrsdatensignalen von einer drahtlosen Vorrichtung (Schritt 501);
Verarbeiten der empfangenen Verkehrsdatensignale und Anwenden eines ersten Sicherheitsprotokolls auf ein erstes WLAN-Verkehrsdatensignal, das von der drahtlosen Vorrichtung empfangen wird, und eines zweiten Sicherheitsprotokolls auf ein zweites WLAN-Verkehrsdatensignal, das von der drahtlosen Vorrichtung empfangen wird (Schritt 503); und
Leiten des ersten WLAN-Verkehrsdatensignals zu einem Knoten des zellularen Kommunikationsnetzwerks und Leiten des zweiten WLAN-Verkehrsdatensignals in Bezug auf Local-Breakout-Verkehr zu einem Knoten des WLANs (Schritt 505), wobei das erste WLAN-Verkehrsdatensignal und das zweite WLAN-Verkehrsdatensignal zum Anwenden des ersten und des zweiten Sicherheitsprotokoll gleichzeitig verarbeitet und durch Verwenden verschiedener Frequenzen für das erste WLAN-Verkehrsdatensignal und das zweite WLAN-Verkehrsdatensignal gleichzeitig zu ihren jeweiligen Knoten geleitet werden.

12. Verfahren nach Anspruch 11, ferner umfassend den Schritt des Bekanntgebens von Authentisierungsfähigkeiten des WLAN-Knoten für andere Knoten und Vorrichtungen.

13. Drahtlose Vorrichtung (500), umfassend:
ein Kommunikationsmodul (501), das zum Kommunizieren von Verkehrsdatensignalen mit einem Knoten eines drahtlosen lokalen Netzwerks, WLAN, ausgelegt ist, wobei die Verkehrsdatensignale ein erstes WLAN-Verkehrsdatensignal, das Verkehr für ein zellulares Kommunikationsnetzwerk entspricht, und ein zweites WLAN-Verkehrsdatensignal für Local-Breakout-Verkehr eines WLANs umfassen, wobei das Kommunikationsmodul ausgelegt ist zum:
Kommunizieren eines ersten WLAN-Verkehrsdatensignals unter Verwendung eines ersten Sicherheitsprotokolls; und Kommunizieren eines zweiten WLAN-Verkehrsdatensignals unter Verwendung eines zweiten Sicherheitsprotokolls gleichzeitig mit dem ersten WLAN-Verkehrsdatensignals durch Verwenden verschiedener Frequenzen für das erste WLAN-Verkehrsdatensignal und das zweite WLAN-Verkehrsdatensignal.

14. Drahtlose Vorrichtung (500) nach Anspruch 13, wobei das Kommunikationsmodul (501) ausgelegt ist zum:
Kommunizieren des ersten WLAN-Verkehrsdatensignals unter Verwendung eines ersten Sicherheitsprotokolls, das unverschlüsselte Kommunikation umfasst; und
Kommunizieren des zweiten WLAN-Verkehrsdatensignals unter Verwendung eines zweiten Sicherheitsprotokolls, das eine Robust Secure Network, RSN,-Authentisierungsprozedur umfasst.

15. Drahtlose Vorrichtung (500) nach Anspruch 13, wobei das Kommunikationsmodul (501) ausgelegt ist zum:
Kommunizieren des ersten WLAN-Verkehrsdatensignals unter Verwendung eines ersten Sicherheitsprotokolls, das Open System Authentication, OSA, umfasst; und
Kommunizieren des zweiten WLAN-Verkehrsdatensignals unter Verwendung eines zweiten Sicherheitsprotokolls, das eine Robust Secure Network, RSN,-Authentisierungsprozedur umfasst.

16. Drahtlose Vorrichtung (500) nach einem der Ansprüche 13 bis 15, wobei das Kommunikationsmodul (501) zum Kommunizieren der ersten und zweiten WLAN-Verkehrsdatensignale unter Verwendung des ersten und des zweiten Sicherheitsprotokolls in Reaktion auf ein vorheriges Empfangen einer Bekanntgabe vom WLAN-Knoten ausgelegt ist, welche die Fähigkeit des WLAN-Knotens zum Empfangen der ersten und zweiten WLAN-Verkehrsdatensignale mit verschiedenen Sicherheitsprotokollen angibt.

17. Verfahren in einer drahtlosen Vorrichtung, wobei das Verfahren umfasst:
Kommunizieren von Verkehrsdatensignalen mit einem Knoten eines drahtlosen lokalen Netzwerks, WLAN, wobei die Verkehrsdatensignale ein erstes WLAN-Verkehrsdatensignal, das Verkehr für ein zellulares Kommunikationsnetzwerk entspricht, und ein zweites WLAN-Verkehrsdatensignal für Local-Breakout-Verkehr eines WLANs (Schritt 701) umfassen;
wobei das erste WLAN-Verkehrsdatensignal unter Verwendung eines ersten Sicherheitsprotokolls kommuniziert wird, und das zweite WLAN-Verkehrsdatensignals unter Verwendung eines zweiten Sicherheitsprotokolls (Schritt 703) gleichzeitig mit dem ersten WLAN-Verkehrsdatensignals durch Verwenden verschiedener Frequenzen für das erste WLAN-Verkehrsdatensignal und das zweite WLAN-Verkehrsdatensignal kommuniziert wird.

18. Verfahren nach Anspruch 17, umfassend die folgenden Schritte:
Kommunizieren des ersten WLAN-Verkehrsdatensignals unter Verwendung eines ersten Sicherheitsprotokolls, das unverschlüsselte Kommunikation umfasst (Schritt 801), und Kommunizieren des zweiten WLAN-Verkehrsdatensignals unter Verwendung eines zweiten Sicherheitsprotokolls, das eine Robust Secure Network, RSN,-Authentisierungsprozedur umfasst (Schritt 803); oder
Kommunizieren des ersten WLAN-Verkehrsdatensignals unter Verwendung eines ersten Sicherheitsprotokolls, das Open System Authentication, OSA, umfasst (Schritt 805), und Kommunizieren des zweiten WLAN-Verkehrsdatensignals unter Verwendung eines zweiten Sicherheitsprotokolls, das eine Robust Secure Network, RSN,-Authentisierungsprozedur umfasst (Schritt 807).

19. Computerprogramm, umfassend Anweisungen, die bei Ausführung auf mindestens einem Prozessor den mindestens einen Prozessor zum Durchführen des Verfahrens nach einem der Ansprüche 11 bis 12 veranlassen.

20. Computerprogramm, umfassend Anweisungen, die bei Ausführung auf mindestens einem Prozessor den mindestens einen Prozessor zum Durchführen des Verfahrens nach einem der Ansprüche 17 bis 18 veranlassen.

21. Datenträger, der das Computerprogramm nach Anspruch 19 oder 20 umfasst, wobei der Datenträger eines von einem elektronischen Signal, einem optischen Signal, einem Funksignal oder einem computerlesbaren Speichermedium ist.

## Revendications

1. Nœud de réseau local sans fil, WLAN, (400) apte à être compris dans un réseau de communication sans fil intégré comprenant un WLAN et un réseau de communication cellulaire, le nœud WLAN (400) comprenant :
un module de réception (401) apte à recevoir des signaux de données de trafic en provenance d'un dispositif sans fil ;
un module de sécurité (403) apte à traiter les signaux de données de trafic reçus et à appliquer un premier protocole de sécurité à un premier signal de données de trafic WLAN reçu en provenance du dispositif sans fil et un deuxième protocole de sécurité à un deuxième signal de données de trafic WLAN reçu en provenance du dispositif sans fil ; et
un module d'acheminement (405) apte à acheminer le premier signal de données de trafic WLAN jusqu'à un nœud du réseau de communication cellulaire et à acheminer le deuxième signal de données de trafic WLAN relatif à un trafic de pointe local jusqu'à un nœud du WLAN, dans lequel le module de sécurité est apte à traiter simultanément le premier signal de données de trafic WLAN et le deuxième signal de données de trafic WLAN depuis le même dispositif sans fil, et le module d'acheminement (405) est apte à acheminer simultanément le premier signal de données de trafic WLAN et le deuxième signal de données de trafic WLAN jusqu'à leurs nœuds respectifs en utilisant différentes fréquences pour le premier signal de données de trafic WLAN et le deuxième signal de données de trafic WLAN.

2. Nœud WLAN selon la revendication 1, dans lequel :
le premier protocole de sécurité comprend un mécanisme de sécurité qui est différent du mécanisme de sécurité du deuxième protocole de sécurité ; ou
le premier protocole de sécurité comprend un mécanisme de sécurité qui a un niveau de sécurité inférieur à celui du deuxième protocole de sécurité, ou vice versa ; ou
le premier protocole de sécurité comprend un niveau de chiffrement qui est inférieur à un niveau de chiffrement du deuxième protocole de sécurité, ou vice versa ; ou
le premier protocole de sécurité comprend un niveau d'authentification qui est inférieur au niveau d'authentification du deuxième protocole de sécurité, ou vice versa.

3. Nœud WLAN (400) selon l'une quelconque des revendications précédentes, dans lequel le premier protocole de sécurité comprend un protocole de sécurité d'authentification de système ouvert, OSA.

4. Nœud WLAN (400) selon l'une quelconque des revendications 1 et 2, dans lequel le premier protocole de sécurité ne comprend pas de sécurité supplémentaire au-dessus d'un protocole de sécurité déjà fourni dans un premier signal de données de trafic WLAN reçu.

5. Nœud WLAN (400) selon l'une quelconque des revendications précédentes, dans lequel le deuxième protocole de sécurité comprend un protocole de sécurité de réseau sécurisé robuste, RSN.

6. Nœud WLAN (400) selon l'une quelconque des revendications précédentes, dans lequel le module de sécurité (403) est en outre apte à annoncer des capacités d'authentification simultanées du nœud WLAN à d'autres nœuds ou dispositifs.

7. Nœud WLAN (400) selon la revendication 6, dans lequel le module de sécurité (403) est apte à annoncer qu'il prend en charge :
une authentification de réseau sécurisé robuste, RSN, sous la forme d'un deuxième protocole de sécurité pour les deuxièmes signaux de données de trafic WLAN qui sont acheminés jusqu'à un nœud du WLAN ; et
une communication non chiffrée en tant que le premier protocole de sécurité pour les premiers signaux de données de trafic WLAN qui sont acheminés jusqu'à un nœud du réseau de communication cellulaire.

8. Nœud WLAN (400) selon l'une quelconque des revendications 6 et 7, dans lequel le module de sécurité (403) est apte à annoncer sa capacité de premier protocole de sécurité et/ou sa capacité de deuxième protocole de sécurité en utilisant :
un élément d'information comprenant un élément de sécurité d'agrégation, ASG ; ou
un élément de réseau sécurisé robuste, RSNE, modifié.

9. Nœud WLAN (400) selon la revendication 8, dans lequel le module de sécurité (403) est apte à annoncer sa capacité de premier protocole de sécurité et/ou sa capacité de deuxième protocole de sécurité en utilisant :
un élément d'informations fourni à l'intérieur d'une trame de données, ou un signal de balise, ou un signal de réponse de demande de sonde, ou un signal de demande/réponse d'authentification ; ou
un élément d'information spécifique au fournisseur.

10. Nœud WLAN (400) selon l'une quelconque des revendications précédentes, dans lequel le premier signal de données de trafic WLAN comprend au moins une partie d'un signal d'agrégation pour un réseau de communication cellulaire.

11. Procédé dans un nœud de réseau local sans fil, WLAN, apte à être compris dans un réseau de communication sans fil intégré comprenant un WLAN et un réseau de communication cellulaire, le procédé comprenant :
la réception de signaux de données de trafic en provenance d'un dispositif sans fil (étape 501) ;
le traitement des signaux de données de trafic reçus et l'application d'un premier protocole de sécurité à un premier signal de données de trafic WLAN reçu en provenance du dispositif sans fil et d'un deuxième protocole de sécurité à un deuxième signal de données de trafic WLAN reçu en provenance du dispositif sans fil (étape 503) ; et
l'acheminement du premier signal de données de trafic WLAN jusqu'à un nœud du réseau de communication cellulaire et l'acheminement du deuxième signal de données de trafic WLAN relatif à un trafic de pointe local jusqu'à un nœud du WLAN (étape 505), dans lequel le premier signal de données de trafic WLAN et le deuxième signal de données de trafic WLAN sont traités simultanément pour appliquer les premier et deuxième protocoles de sécurité, et sont acheminés simultanément jusqu'à leurs nœuds respectifs en utilisant différentes fréquences pour le premier signal de données de trafic WLAN et le deuxième signal de données de trafic WLAN.

12. Procédé selon la revendication 11, comprenant en outre l'étape de l'annonce de capacités d'authentification du nœud WLAN à d'autres nœuds ou dispositifs.

13. Dispositif sans fil (500) comprenant :
un module de communication (501) apte à communiquer des signaux de données de trafic avec un nœud de réseau local sans fil, WLAN, dans lequel les signaux de données de trafic comprennent un premier signal de données de trafic WLAN correspondant à un trafic pour un réseau de communication cellulaire, et un deuxième signal de données de trafic WLAN pour un trafic de pointe local d'un WLAN, dans lequel le module de communication est apte à :
communiquer un premier signal de données de trafic WLAN en utilisant un premier protocole de sécurité ; et communiquer un deuxième signal de données de trafic WLAN en utilisant un deuxième protocole de sécurité simultanément avec le premier signal de données de trafic WLAN en utilisant différentes fréquences pour le premier signal de données de trafic WLAN et le deuxième signal de données de trafic WLAN.

14. Dispositif sans fil (500) selon la revendication 13, dans lequel le module de communication (501) est apte à :
communiquer le premier signal de données de trafic WLAN en utilisant un premier protocole de sécurité qui comprend une communication non chiffrée ; et
communiquer le deuxième signal de données de trafic WLAN en utilisant un deuxième protocole de sécurité qui comprend une procédure d'authentification de réseau sécurisé robuste, RSN.

15. Dispositif sans fil (500) selon la revendication 13, dans lequel le module de communication (501) est apte à :
communiquer le premier signal de données de trafic WLAN en utilisant un premier protocole de sécurité qui comprend une authentification de système ouvert, OSA ; et
communiquer le deuxième signal de données de trafic WLAN en utilisant un deuxième protocole de sécurité qui comprend une procédure d'authentification de réseau sécurisé robuste, RSN.

16. Dispositif sans fil (500) selon l'une quelconque des revendications 13 à 15, dans lequel le module de communication (501) est apte à communiquer les premier et deuxième signaux de données de trafic WLAN en utilisant les premier et deuxième protocoles de sécurité, en réponse à la réception préalable d'une annonce en provenance du nœud WLAN, indiquant la capacité du nœud WLAN à recevoir les premier et deuxième signaux de données de trafic WLAN ayant différents protocoles de sécurité.

17. Procédé dans un dispositif sans fil, le procédé comprenant :
la communication de signaux de données de trafic avec un nœud de réseau local sans fil, WLAN, dans lequel les signaux de données de trafic comprennent un premier signal de données de trafic WLAN correspondant à un trafic pour un réseau de communication cellulaire, et un deuxième signal de données de trafic WLAN pour un trafic de pointe local d'un WLAN (étape 701) ;
dans lequel le premier signal de données de trafic WLAN est communiqué en utilisant un premier protocole de sécurité, et le deuxième signal de données de trafic WLAN est communiqué en utilisant un deuxième protocole de sécurité (étape 703) simultanément avec le premier signal de données de trafic WLAN en utilisant différentes fréquences pour le premier signal de données de trafic WLAN et le deuxième signal de données de trafic WLAN.

18. Procédé selon la revendication 17, comprenant les étapes de :
la communication du premier signal de données de trafic WLAN en utilisant un premier protocole de sécurité qui comprend une communication non chiffrée (étape 801), et la communication du deuxième signal de données de trafic WLAN en utilisant un deuxième protocole de sécurité qui comprend une procédure d'authentification de réseau sécurisé robuste, RSN, (étape 803) ; ou
la communication du premier signal de données de trafic WLAN en utilisant un premier protocole de sécurité qui comprend une authentification de système ouvert, OSA, (étape 805), et la communication du deuxième signal de données de trafic WLAN en utilisant un deuxième protocole de sécurité qui comprend une procédure d'authentification de réseau sécurisé robuste, RSN, (étape 807).

19. Programme informatique comprenant des instructions qui, lorsqu'elles sont exécutées sur au moins un processeur, amènent l'au moins un processeur à effectuer le procédé selon l'une quelconque des revendications 11 et 12.

20. Programme informatique comprenant des instructions qui, lorsqu'elles sont exécutées sur au moins un processeur, amènent l'au moins un processeur à effectuer le procédé selon l'une quelconque des revendications 17 et 18.

21. Porteuse comprenant le programme informatique selon la revendication 19 ou 20, dans laquelle la porteuse est l'un d'un signal électronique, d'un signal optique, d'un signal radio ou d'un support de mémorisation lisible par ordinateur.
